# EUROPEAN PATENT SPECIFICATION

(11) **EP 2 863 642 B1**
(45) Date of publication and mention of the grant of the patent: **25.01.2017**
(21) Application number: 13839444.0
(22) Date of filing: 03.06.2013
(51) Int. Cl.: H04L 12/18, H04M 3/56, H04N 7/15

(54) **METHOD, DEVICE AND SYSTEM FOR VIDEO CONFERENCE RECORDING AND PLAYING**
VERFAHREN, VORRICHTUNG UND SYSTEM ZUR AUFZEICHNUNG UND WIEDERGABE VON VIDEOKONFERENZEN
PROCÉDÉ, DISPOSITIF ET SYSTÈME POUR L'ENREGISTREMENT ET LA LECTURE DU CONTENU D'UNE CONFÉRENCE VIDÉO

(30) Priority: 24.09.2012 CN 201210358088
(43) Date of publication of application: 22.04.2015
(73) Proprietor: Huawei Technologies Co., Ltd., Longgang District Shenzhen, Guangdong 518129 (CN)
(72) Inventor: QIN, Yongning, Shenzhen Guangdong 518129 (CN); XIAO, Min, Shenzhen Guangdong 518129 (CN)
(74) Representative: Thun, Clemens
(86) International application number: PCT/CN2013/076642
(87) International publication number: WO 2014/044059

(56) References cited:
- WO-A1-2004/095839
- CA-A1- 2 800 078
- CN-A- 101 771 853
- CN-A- 102 209 230
- CN-A- 102 223 515
- GB-A- 2 352 845

## Description

### TECHNICAL FIELD

The present invention relates to the field of communications, and in particular, to a video conference recording method, device, and system.

### BACKGROUND

With development of video encoding technologies and information compression technologies and gradual popularization of digital networks, a video conference system for performing synchronous video transmission by using a digital network has gradually gained recognition from people. In the early 1990s, the first set of international standards H.320 relating to a video conference system were approved, so that a problem of compatibility between products of different brands was resolved, and a video conference system based on a traditional telecommunication network, such as an integrated services digital network (ISDN), became a main trend in the video conference product market. In the middle and late 1990s, as Internet Protocol (IP) network technologies gradually matured, IP network development became an important network platform of global communication. In 1998, the ITU-T (International Telecommunication Union-Telecommunication Standardization Sector) issued IP network-based H.323 video conference standards, so that research and application orientations of the video conference system gradually shifted to an IP network-based development orientation.

In recent years, with further development of the IP network technologies and video compression technologies, the video conference system is more widely applied. In actual application, a user usually has a requirement for recording a conference process, that is, recording conference content for information storage or future playback. Especially when a video conference is in progress, if the user requires playback of a conference process video of a previous moment, the prior art cannot support this requirement.

WO 2004/095839 A1 provides a method including establishing a multiparty conference via a multipoint control unit (MCU); mixing media streams for the conference at the MCU; providing a mixed media stream from the MCU to a recording server for saving as one or more media files; and switching between sending a real-time media stream to a party to the conference and a recorded media stream. In certain embodiments, the recorded media stream is played back at a higher speed than it was recorded to allow the party to play back part of a real-time session and return to listening in real time without having to skip over part of the conversation.

Further prior art is represented by document GB 2 352 845.

### SUMMARY

Embodiments of the present invention provide a video conference recording method, device, and system, to implement recording and playback of a video of a conference according to a user requirement when the video conference is in progress.

To achieve the foregoing objective, the following technical solutions are adopted in the embodiments of the present invention.

According to one aspect of the embodiments of the present invention, a video conference recording method is provided and includes:
receiving a playback request message input by a user;
sending the playback request message to a recording server, so that the recording server selects recorded streaming media information according to the playback request message;
receiving a combination data stream sent by the recording server, where the combination data stream includes at least two channels of the streaming media information that is selected, and each of the at least two channels of the streaming media information is corresponding to one conference site; and
displaying the streaming media information included in the received combination data stream in a display area, wherein the display area of the user terminal comprises at least two panes, each of the at least two panes is used to display an image of one conference site and each of the at least two panes has a progress bar indicating time of each pane.

The receiving a playback request message input by a user includes:
receiving the playback request message input by the user in the display area of a user terminal.

The playback request message includes streaming media identifier information and playback location information, where the streaming media identifier information includes conference site identifier information of a conference site that participates in a conference or pane identifier information corresponding to the conference site that participates in the conference; and
the recording server selects a conference site that requires playback according to the streaming media identifier information and selects, according to the playback location information, streaming media information that requires playback from recorded streaming media information of the conference site.

Before the receiving a playback request message input by a user, the method further includes:
receiving the streaming media identifier information sent by the recording server.

The displaying the streaming media information included in the received combination data stream includes:
when the streaming media identifier information includes identifier information of a first pane or conference site identifier information of a first conference site corresponding to the first pane, displaying, in the first pane of the display area of the user terminal, first streaming media information that is received and corresponding to the identifier information of the first pane or the conference site identifier information of the first conference site; or
when the streaming media identifier information is identifier information of a first pane or conference site identifier information of a first conference site corresponding to the first pane, displaying, in the display area of the user terminal, first streaming media information that is received and corresponding to the identifier information of the first pane or the conference site identifier information of the first conference site; or when the streaming media identifier information includes identifier information of a first pane or conference site identifier information of a first conference site corresponding to the first pane, and second pane identifier information or conference site identifier information of a second conference site corresponding to a second pane, displaying, in the first pane of the display area of the user terminal, first streaming media information that is received and corresponding to the identifier information of the first pane or the conference site identifier information of the first conference site; and synchronously displaying, in the second pane of the display area of the user terminal, second streaming media information that is received and corresponding to the second pane identifier information or the conference site identifier information of the second conference site.

The streaming media information includes at least one type of the following information: video information, audio information, image information, and subtitle information.

According to another aspect of the embodiments of the present invention, a video conference recording method is provided and includes:
obtaining a playback request message;
selecting streaming media information according to the playback request message;
combining at least two channels of the streaming media information that is selected into a combination data stream, where each of the at least two channels of the streaming media information is corresponding to one conference site; and
sending the combination data stream to at least one user terminal wherein the streaming media information comprised in the sent combination data stream is displayed at the user terminal in a display area and the display area of the user terminal comprises at least two panes, each of the at least two panes is used to display an image of one conference site and each of the at least two panes has a progress bar indicating time of each pane.

The obtaining a playback request message includes:
receiving the playback request message sent by the at least one user terminal; or
obtaining the playback request message input by a user in a display area of a recording server, where the display area of the recording server includes at least one pane, and each of the at least one pane is used to display an image of one conference site.

After the selecting streaming media information according to the playback request message, the method further includes:
displaying the streaming media information that is selected and included in the combination data stream.

The playback request message includes streaming media identifier information and playback location information, where the streaming media identifier information includes conference site identifier information of a conference site that participates in a conference or pane identifier information corresponding to the conference site that participates in the conference; and
the selecting streaming media information according to the playback request message is specifically:
selecting a conference site that requires playback according to the streaming media identifier information and selecting, according to the playback location information, streaming media information that requires playback from recorded streaming media information of the conference site.

Before the obtaining a playback request message, the method further includes:
sending the streaming media identifier information to the at least one user terminal.

The displaying the streaming media information that is selected and included in the combination data stream includes:
when the streaming media identifier information includes identifier information of a first pane or conference site identifier information of a first conference site corresponding to the first pane, displaying, in the first pane of the display area of the recording server, first streaming media information that is selected and corresponding to the identifier information of the first pane or the conference site identifier information of the first conference site; or
when the streaming media identifier information is identifier information of a first pane or conference site identifier information of a first conference site corresponding to the first pane, displaying, in the display area of the recording server, first streaming media information that is selected and corresponding to the identifier information of the first pane or the conference site identifier information of the first conference site; or when the streaming media identifier information includes identifier information of a first pane or conference site identifier information of a first conference site corresponding to the first pane, and second pane identifier information or conference site identifier information of a second conference site corresponding to a second pane, displaying, in the first pane of the display area of the recording server, first streaming media information that is selected and corresponding to the identifier information of the first pane or the conference site identifier information of the first conference site; and synchronously displaying, in the second pane of the display area of the recording server, second streaming media information that is selected and corresponding to the second pane identifier information or the conference site identifier information of the second conference site.

The streaming media information includes at least one type of the following information: video information, audio information, image information, and subtitle information.

According to another aspect of the embodiments of the present invention, a user terminal is provided and includes:
a receiver, configured to receive the playback request message input by a user;
a sender, configured to send the playback request message to a recording server, so that the recording server selects recorded streaming media information according to the playback request message, where:
   the receiver is further configured to receive a combination data stream sent by the recording server, where the combination data stream includes at least two channels of the streaming media information that is selected,
   and each of the at least two channels of the streaming media information is corresponding to one conference site; and
   a display area of the user terminal, configured to display the streaming media information included in the received combination data stream ;
   wherein the display area of the user terminal comprises at least two panes, each of the at least two panes is used to display an image of one conference site and each of the at least two panes has a progress bar indicating time of each pane.

The receiver is further configured to:
receive the playback request message input by the user in the display area of the user terminal.

The playback request message includes streaming media identifier information and playback location information, where the streaming media identifier information includes conference site identifier information of a conference site that participates in a conference or pane identifier information corresponding to the conference site that participates in the conference; and
the recording server selects a conference site that requires playback according to the streaming media identifier information and selects, according to the playback location information, streaming media information that requires playback from recorded streaming media information of the conference site.

The display area of the user terminal is further configured to:
when the streaming media identifier information includes identifier information of a first pane or conference site identifier information of a first conference site corresponding to the first pane, display, in the first pane of the display area of the user terminal, first streaming media information that is received and corresponding to the identifier information of the first pane or the conference site identifier information of the first conference site; or
when the streaming media identifier information is identifier information of a first pane or conference site identifier information of a first conference site corresponding to the first pane, display, in the display area of the user terminal, first streaming media information that is received and corresponding to the identifier information of the first pane or the conference site identifier information of the first conference site; or
when the streaming media identifier information includes identifier information of a first pane or conference site identifier information of a first conference corresponding to the first pane, and second pane identifier information or conference site identifier information of a second conference site corresponding to a second pane, display, in the first pane of the display area of the user terminal, first streaming media information that is received and corresponding to the identifier information of the first pane or the conference site identifier information of the first conference site; and synchronously display, in the second pane of the display area of the user terminal, second streaming media information that is received and corresponding to the second pane identifier information or the conference site identifier information of the second conference site.

According to another aspect of the embodiments of the present invention, a recording server is provided and includes:
a receiver, configured to obtain a playback request message;
a processor, configured to select streaming media information according to the playback request message, where:
   the processor is further configured to combine at least two channels of the streaming media information that is selected into a combination data stream, where each of the at least two channels of the streaming media information is corresponding to one conference site; and
   a sender, configured to send the combination data stream to at least one user terminal wherein the streaming media information comprised in the sent combination data stream is displayed at the user terminal in a display area and the display area of the user terminal comprises at least two panes, each of the at least two panes is used to display an image of one conference site and each of the at least two panes has a progress bar indicating time of each pane.

The receiver is further configured to:
receive the playback request message sent by the at least one user terminal; or
obtain the playback request message input by a user in a display area of the recording server, where the display area of the recording server includes at least one pane, and each of the at least one pane is used to display a real-time image of one conference site.

The playback request message includes streaming media identifier information and playback location information, where the streaming media identifier information includes conference site identifier information of a conference site that participates in a conference or pane identifier information corresponding to the conference site that participates in the conference; and
the processor is specifically configured to:
   select a conference site that requires playback according to the streaming media identifier information and select, according to the playback location information, streaming media information that requires playback from recorded streaming media information of the conference site.

The display area of the recording server is further configured to:
when the streaming media identifier information includes identifier information of a first pane or conference site identifier information of a first conference site corresponding to the first pane, display, in the first pane of the display area of the recording server, first streaming media information that is selected and corresponding to the identifier information of the first pane or the conference site identifier information of the first conference site; or
when the streaming media identifier information is identifier information of a first pane or conference site identifier information of a first conference site corresponding to the first pane, display, in the display area of the recording server, first streaming media information that is selected and corresponding to the identifier information of the first pane or the conference site identifier information of the first conference site; or when the streaming media identifier information includes identifier information of a first pane or conference site identifier information of a first conference site corresponding to the first pane, and second pane identifier information or conference site identifier information of a second conference site corresponding to a second pane, display, in the first pane of the display area of the recording server, first streaming media information
that is selected and corresponding to the identifier information of the first pane or the conference site identifier information of the first conference site; and synchronously display, in the second pane of the display area of the recording server, second streaming media information that is selected and corresponding to the second pane identifier information or the conference site identifier information of the second conference site.

According to still another aspect of the embodiments of the present invention, a video conference recording system is provided and includes at least one user terminal as stated above, and the foregoing recording server.

According to the video conference recording method, device, and system provided in the embodiments of the present invention, a playback request message input by a user is received, and the playback request message is sent to a recording server; the recording server can select streaming media information according to the playback request message; and after receiving a combination data stream sent by the recording server, a user terminal displays the at least one channel of the streaming media information that is received, where the combination data stream includes the at least one channel of the streaming media information, and each of the at least one channel of the streaming media information is corresponding to one conference site. When recording and playback of a video conference are performed by using the method, recording and playback of a video of the conference can be implemented according to a user requirement when the video conference is in progress, thereby improving user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a video conference recording method according to an embodiment of the present invention;
FIG. 2 is a schematic flowchart of another video conference recording method according to an embodiment of the present invention;
FIG. 3 is a schematic diagram of a signaling procedure of another video conference recording method according to an embodiment of the present invention;
FIG. 4 is a schematic diagram of a display image of a user terminal according to an embodiment of the present invention;
FIG. 5 is a schematic diagram of a display image of another user terminal according to an embodiment of the present invention;
FIG. 6 is a schematic diagram of a display image of another user terminal according to an embodiment of the present invention;
FIG. 7 is a schematic diagram of a display image of another user terminal according to an embodiment of the present invention;
FIG. 8 is a schematic diagram of a display image of still another user terminal according to an embodiment of the present invention;
FIG. 9 is a schematic structural diagram of a user terminal according to an embodiment of the present invention;
FIG. 10 is a schematic structural diagram of another user terminal according to an embodiment of the present invention;
FIG. 11 is a schematic structural diagram of a recording server according to an embodiment of the present invention;
FIG. 12 is a schematic structural diagram of another recording server according to an embodiment of the present invention; and
FIG. 13 is a schematic structural diagram of a video conference recording system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

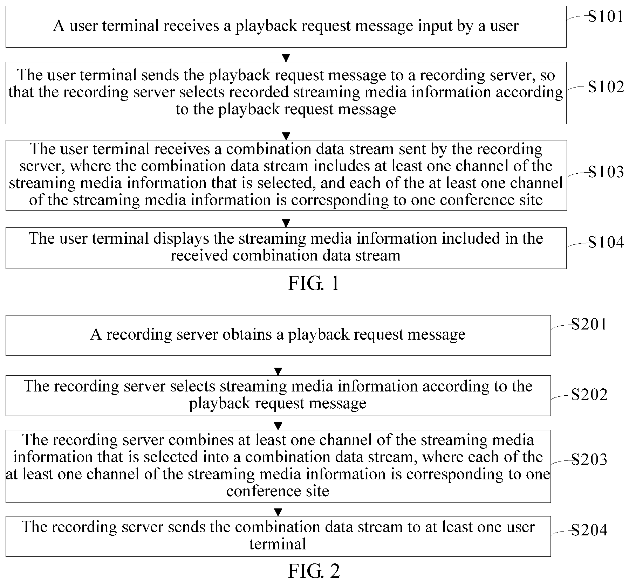

A video conference recording method provided in an embodiment of the present invention relates to a user terminal. As shown in FIG. 1, the method includes:
S101: The user terminal receives a playback request message input by a user.

The playback request message may include streaming media identifier information and playback location information, where the streaming media identifier information may further include conference site identifier information of a conference site that participates in a conference or pane identifier information corresponding to the conference site that participates in the conference. Specifically, a recording server may select a conference site that requires playback according to the streaming media identifier information and select, according to the playback location information, streaming media information that requires playback from recorded streaming media information of the conference site. For example, during a video conference, users participating in the video conference may be in multiple different conference sites, a screen of a user terminal of each user has multiple panes, and each pane is corresponding to one conference site. When needing to watch a historical image of a conference site before a current moment, a user may select, in a manner such as a remote control or a touchscreen, streaming media identifier information of the target conference site and information about a playback location that requires recording and playback.

S102: The user terminal sends the playback request message to the recording server, so that the recording server selects recorded streaming media information according to the playback request message.

S103: The user terminal receives a combination data stream sent by the recording server, where the combination data stream includes at least one channel of the streaming media information that is selected, and each of the at least one channel of the streaming media information is corresponding to one conference site.

For example, when wanting to view historical images of two conference sites at the same time, the user selects streaming media identifier information of the two conference sites from the input playback request message, and selects required playback location information. After obtaining the playback request message, the recording server finds corresponding videos of the two conference sites according to the streaming media identifier information carried in the playback request message, extracts a video starting from a corresponding time point according to the playback location information, combines the selected two channels of streaming media information into a combination data stream, and sends the combination data stream to the user terminal that sends the request.

S104: The user terminal displays the streaming media information included in the received combination data stream.

The streaming media information may specifically include at least one type of the following information: video information, audio information, image information, and subtitle information.

According to the video conference recording method provided in the embodiment of the present invention, a playback request message input by a user is received, and the playback request message is sent to a recording server; the recording server can select streaming media information according to the playback request message; and after receiving a combination data stream sent by the recording server, a user terminal displays at least one channel of streaming media information that is received, where the combination data stream includes the at least one channel of the streaming media information, and each of the at least one channel of the streaming media information is corresponding to one conference site. When recording and playback of a video conference are performed by using the method, recording and playback of a video of the conference can be implemented according to a user requirement when the video conference is in progress, thereby improving user experience.

Correspondingly, a video conference recording method provided in an embodiment of the present invention relates to a recording server. As shown in FIG. 2, the method includes:
S201: The recording server obtains a playback request message.

Specifically, the recording server may receive the playback request message sent by at least one user terminal; or when the recording server has a display area, the recording server may obtain the playback request message input by a user in the display area of the recording server, where the display area of the recording server includes at least one pane, and each pane is used to display a real-time image of one conference site. For a process during which the recording server obtains the playback request message input by the user in the display area of the recording server, reference may be made to a process during which a user terminal receives the playback request message input by a user.

S202: The recording server selects streaming media information according to the playback request message.

The playback request message may include streaming media identifier information and playback location information, where the streaming media identifier information may further include conference site identifier information of a conference site that participates in a conference or pane identifier information corresponding to the conference site that participates in the conference. Specifically, the recording server may select a conference site that requires playback according to the streaming media identifier information and select, according to the playback location information, streaming media information that requires playback from recorded streaming media information of the conference site. For example, the recording server may select an image of a conference site that requires recording and playback according to the streaming media identifier information, and the recording server may also determine a start time point of a historical image that requires recording and playback according to the playback location information.

S203: The recording server combines at least one channel of the streaming media information that is selected into a combination data stream, where each of the at least one channel of the streaming media information is corresponding to one conference site.

S204: The recording server sends the combination data stream to at least one user terminal.

The streaming media information may specifically include at least one type of the following information: video information, audio information, image information, and subtitle information.

According to the video conference recording method provided in the embodiment of the present invention, a playback request message input by a user is received, and the playback request message is sent to a recording server; the recording server can select streaming media information according to the playback request message; and after receiving a combination data stream sent by the recording server, a user terminal displays at least one channel of streaming media information that is received, where the combination data stream includes the at least one channel of the streaming media information, and each of the at least one channel of the streaming media information is corresponding to one conference site. When recording and playback of a video conference are performed by using the method, recording and playback of a video of the conference can be implemented according to a user requirement when the video conference is in progress, thereby improving user experience.

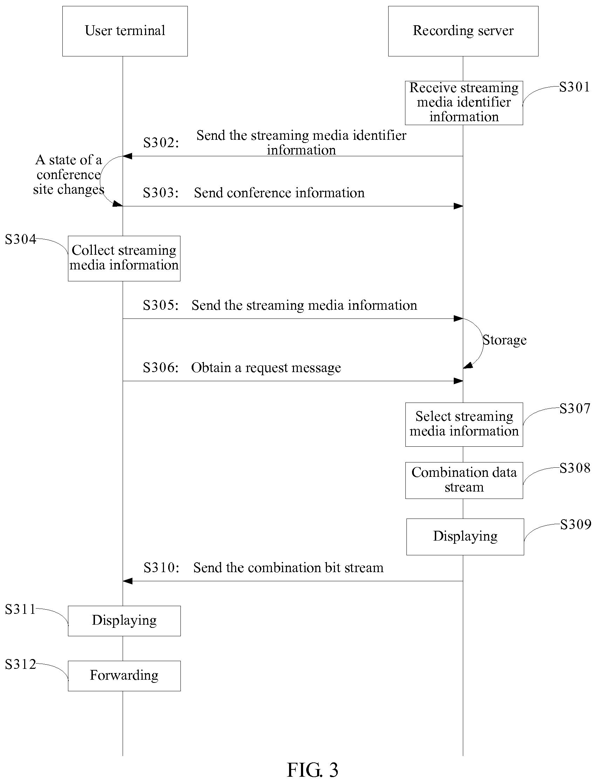

Further, a video conference recording method according to an embodiment of the present invention, as shown in FIG. 3, includes:
S301: A recording server receives streaming media identifier information.

Specifically, before a video conference starts, a user may preset a group of streaming media identifier information on the recording server according to historical experience or an estimated quantity of conference sites that participate in the video conference, so that the recording server monitors, in real time, at least one user terminal that records the streaming media identifier information. Alternatively, when a user terminal accesses a conference network, the recording server automatically generates a network topology, to obtain streaming media identifier information of all conference sites. In addition, the recording server may configure a recording policy according to the streaming media identifier information. For example, the recording server may select conference videos of all user terminals that record the streaming media identifier information.

S302: The recording server sends the streaming media identifier information to the at least one user terminal.

For example, if the streaming media identifier information includes streaming media identifier information of a conference site 1 to a conference site 9, after a user terminal receives the streaming media identifier information, in a display area of the user terminal, panes corresponding to the conference site 1 to the conference site 9 are in an enabled state. In this way, the user terminal can easily and quickly learn information about all conference sites that participate in the conference, and quickly establish a connection with the recording server, so that the user terminal can select, according to the streaming media identifier information and from all the conference sites that participate in the conference, streaming media information of a conference site that requires playback.

S303: When a state of a conference site changes, the user terminal sends conference information to the recording server, so that the recording server updates the streaming media identifier information.

The conference information may be used to indicate whether a current conference site participates in the conference, or may be used to indicate all streaming media that a current conference site can provide.

For example, if the at least one user terminal includes user terminals of the conference site 1 to the conference site 9 at an initial moment of the video conference, a user of the conference site 9 leaves the conference when the conference is in progress, and the user terminal of the conference site 9 disconnects a connection with other conference sites, the user terminal sends conference information to the recording server, where the conference information indicates that the user terminal of the conference site 9 has been disconnected. Alternatively, if the user of the conference site 9 leaves the conference for a period of time and then joins the conference again, when the user terminal of the conference site 9 accesses the network again, the user terminal also sends conference information to the recording server, where the conference information indicates that the user terminal of the conference site 9 has been connected, and the recording server may update the streaming media identifier information according to the conference information. In this way, the user terminal that has been disconnected may be prevented from continuing occupying a resource of the recording server.

S304: The user terminal collects an image and voice of a conference site accommodating a user, to obtain streaming media information.

For example, the user terminal may obtain, by collection with a camera, image information of the conference site accommodating the user; obtain, by collection with a microphone, voice information of the conference site accommodating the user; and combine the image information and the voice information according to same time, to form the streaming media information of the conference site.

S305: The recording server receives and stores the streaming media information sent by the at least one user terminal.

The streaming media information may specifically include at least one type of the following information: video information, audio information, image information, and subtitle information.

S306: The recording server obtains a playback request message.

Specifically, the recording server may receive the playback request message sent by the at least one user terminal; or when the recording server has a display area, the recording server may obtain the playback request message input by a user in the display area of the recording server, where the display area of the recording server includes at least one pane, and each pane is used to display a real-time image of one conference site.

It should be noted that, for a recording server that has a display area, the recording server may select streaming media information according to a playback request message obtained from a user terminal, and return the selected streaming media information to the user terminal that sends the request or perform playback in the display area of the recording server. Alternatively, the recording server may select streaming media information according to a playback request message input by using a user terminal in the display area of the recording server, and send the selected streaming media information to the specified user terminal or perform playback in the display area of the recording server. For a process during which the recording server obtains the playback request message input by the user in the display area of the recording server, reference may be made to a process during which a user terminal receives a playback request message input by a user.

When the recording server receives the playback request message sent by the user terminal, the playback request message may include streaming media identifier information and playback location information, where the streaming media identifier information may further include conference site identifier information of a conference site that participates in a conference or pane identifier information corresponding to the conference site that participates in the conference. The streaming media identifier information in the playback request message may be streaming media identifier information that is selected by the user from the streaming media identifier information obtained by the user terminal and is corresponding to a conference site that requires playback. The recording server may select the conference site that requires playback according to the streaming media identifier information and select, according to the playback location information, streaming media information that requires playback from recorded streaming media information of the conference site. S307: The recording server selects streaming media information according to the playback request message.

S308: The recording server combines at least one channel of the streaming media information that is selected into a combination data stream, where each of the at least one channel of the streaming media information is corresponding to one conference site.

The recording server with a data stream combination function may perform data stream combination by using a data stream combining module of the recording server; or the recording server may send the at least one channel of the streaming media information that is selected to a conference multipoint control unit (MCU), and the conference MCU may combine the at least one channel of the streaming media information into the combination data stream.

Specifically, the following method may be used to combine multiple channel of streaming media information to obtain a combination data stream: after the recording server selects at least one channel of streaming media information, calling a data stream combination resource; sending the multiple channels of streaming media information that need to be combined to each sub-stream for decoding, to generate decoded information of the streaming media information; and combining decoded information of each sub-stream into a uniform combination data stream, and encoding the combination data stream.

For example, when the recording server selects multiple channels of streaming media information according to the playback request message input by the user, a combination subsystem of the recording server is triggered, and the combination subsystem delivers a combination command to a combination control module.

The combination control module analyzes the combination command, calls a combination resource management module, and allocates a processing resource. If the combination resource management module does not have sufficient resources for performing data stream combination, the combination control module reports an error indicating insufficient resources to the combination subsystem. If the combination resource management has sufficient resources, the combination control module calls a resource.

After obtaining the resource by calling, the combination control module delivers stream encoder and stream decoder scheduling commands to a stream processing control module of a related processing apparatus that is in the recording server and configured to perform data stream combination. After receiving the stream encoder and stream decoder scheduling commands, the stream processing control module of the related processing apparatus forwards the scheduling commands to a stream encoding module and a stream decoding module, to schedule a corresponding encoder and a corresponding decoder.

The combination control module sends an instruction to a stream switching module, to instruct the stream switching module to send the multiple channels of streaming media information that need to be combined to a stream processing module in which a stream decoder of each sub-stream of the combination data stream is located. For example, the multiple channels of streaming media information that need to be combined may be sent to a stream processing module in which a stream decoder of a pane of a combined video screen is located.

The stream processing module in which the stream decoder of each sub-stream of the combination data stream is located distributes the received streaming media information to the stream decoding module. The stream decoding module decodes a data stream of the streaming media information to generate decoded information of the streaming media information (for example, decoded information of video information is a decoded image, and decoded information of audio information is decoded audio data), and sends the decoded streaming media information to a corresponding stream processing module.

The stream processing module in which the stream decoder of each sub-stream of the combination data stream is located sends the received decoded streaming media information to a stream processing module in which an encoder of the combination data stream is located. The stream processing module distributes the decoded streaming media information to a stream encoding module of the combination data stream, combines data of each sub-stream into a uniform combination data stream, and encodes the combination data stream.

A combination data stream obtained after uniform encoding is stored inside the recording server, so that the recording server displays, or sends to the user terminal, information about the combination data stream.

In this way, one type of combination data stream may include multiple channels of streaming media information that are demanded by a user, which, for a video conference, can implement recording and playback of audio and video information of multiple conference sites under a precondition that bandwidth remains unchanged. S309: The recording server displays the at least one channel of the streaming media information that is selected.

Specifically, when the streaming media identifier information includes identifier information of a first pane or conference site identifier information of a first conference site corresponding to the first pane, first streaming media information that is selected and corresponding to the identifier information of the first pane or the conference site identifier information of the first conference site is displayed in the first pane of the display area of the recording server; or when the streaming media identifier information is identifier information of a first pane or conference site identifier information of a first conference site corresponding to the first pane, first streaming media information that is selected and corresponding to the identifier information of the first pane or the conference site identifier information of the first conference site is displayed in the display area; or when the streaming media identifier information includes identifier information of a first pane or conference site identifier information of a first conference site corresponding to the first pane, and second pane identifier information or conference site identifier information of a second conference site corresponding to a second pane, first streaming media information that is selected and corresponding to the identifier information of the first pane or the conference site identifier information of the first conference site is displayed in the first pane of the display area of the recording server; and second streaming media information that is selected and corresponding to the second pane identifier information or the conference site identifier information of the second conference site is synchronously displayed in the second pane of the display area of the recording server.

For example, when the recording server has an audio and video output device, the recording server may directly play the at least one channel of the streaming media information that is selected. Alternatively, the user may copy the at least one channel of the streaming media information or send the information to another private device of the user by using a data interface of the recording server.

S310: The user terminal receives the combination data stream sent by the recording server, where the combination data stream includes the at least one channel of the streaming media information that is selected, and each of the at least one channel of the streaming media information is corresponding to one conference site.

S311: The user terminal displays the at least one channel of the streaming media information that is received.

Specifically, when the streaming media identifier information includes identifier information of a first pane or conference site identifier information of a first conference site corresponding to the first pane, first streaming media information that is received and corresponding to the identifier information of the first pane or the conference site identifier information of the first conference site is displayed in the first pane of the display area of the user terminal; or when the streaming media identifier information is identifier information of a first pane or conference site identifier information of a first conference site corresponding to the first pane, first streaming media information that is received and corresponding to the identifier information of the first pane or the conference site identifier information of the first conference site is displayed in the display area of the user terminal; or when the streaming media identifier information includes identifier information of a first pane or conference site identifier information of a first conference site corresponding to the first pane, and second pane identifier information or conference site identifier information of a second conference site corresponding to a second pane, first streaming media information that is received and corresponding to the identifier information of the first pane or the conference site identifier information of the first conference site is displayed in the first pane of the display area of the user terminal; and second streaming media information that is received and corresponding to the second pane identifier information or the conference site identifier information of the second conference site is synchronously displayed in the second pane of the display area of the user terminal.

S312: The user terminal forwards the combination data stream to at least one another user terminal.

According to the video conference recording method provided in the embodiment of the present invention, a playback request message input by a user is received, and the playback request message is sent to a recording server; the recording server can select streaming media information according to the playback request message; and after receiving a combination data stream sent by the recording server, a user terminal displays at least one channel of streaming media information that is received, where the combination data stream includes the at least one channel of the streaming media information, and each of the at least one channel of the streaming media information is corresponding to one conference site. When recording and playback of a video conference are performed by using the method, recording and playback of a video of the conference can be implemented according to a user requirement when the video conference is in progress, thereby improving user experience.

During a process of multiple user terminals actually performing a video conference, a pane of a screen of each user terminal may display a real-time video shot by a user terminal of another conference site. Each pane has a progress bar indicating a time progress. A location in which the progress bar is located is a current data location. A user may request, by operating the progress bar, the recording server to record and play back historical video information.

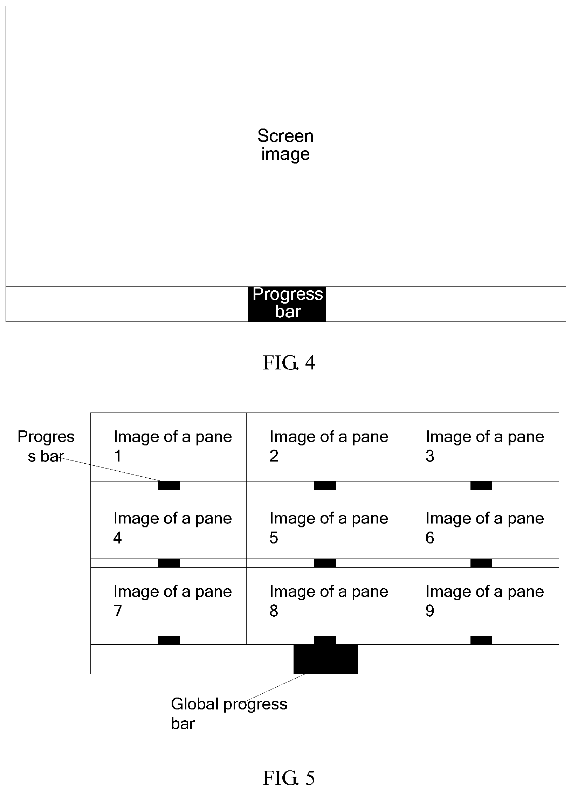

For example, when the user terminal participating in the video conference includes only two user terminals: a local user terminal and a user terminal located in a remote conference site, a screen of the local user terminal displays only an image of the another conference site. As shown in FIG. 4, an image displayed on the screen of the local user terminal is a real-time image of the another conference site, a progress bar indicating time is in a lower part of the image, and a location in which the progress bar is located is a current time point.

When wanting to view a historical video image of the another conference site, the user may drag the progress bar to the left to a desired historical moment, so that the local user terminal determines that the user has entered a playback request message. The local user terminal sends the request message to the recording server, and the recording server selects, according to the request message, corresponding streaming media information stored on the recording server, performs adaptation processing on the selected historical video image, and sends a historical video image obtained after the adaptation processing to the local user terminal.

The local user terminal decodes the received streaming media information, and displays decoded streaming media information on the screen of the local user terminal. The streaming media information may include at least one type of the following information: video information, audio information, image information, and subtitle information. For example, when the user drags the progress bar to view the historical video image of the another conference site, voice and subtitles are also played with dragging by the user.

For another example, when the user terminal participating in the video conference includes user terminals located in multiple conference sites, as shown in FIG. 5, a screen of a local user terminal is divided into 9 different display panes, which respectively display real-time images of a conference site 1 to a conference site 9. A progress bar indicating time of each pane is in a lower part of each pane, and a global progress bar indicating overall time is in a lower part of an overall screen.

When wanting to view a historical video image of all other conference sites, the user may drag the global progress bar to the left to a desired historical moment, so that the local user terminal determines that the user has entered a playback request message. The local user terminal sends the request message to the recording server. The recording server selects, according to the request message, corresponding multiple channels of streaming media information stored on the recording server, and the recording server may combine the multiple channels of streaming media information into a combination data stream, and send the combination data stream to the local user terminal.

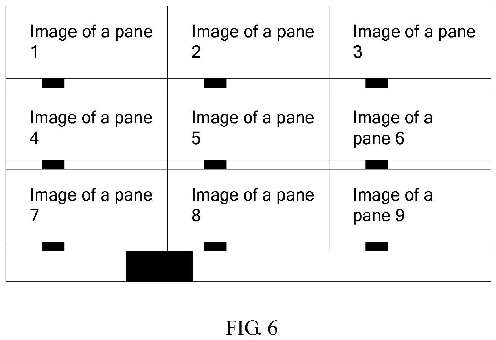

The local user terminal decodes the received combination data stream, and displays the combination data stream after decoding on the screen of the local user terminal, and each pane displays a historical image of a same historical moment of a corresponding conference site. As shown in FIG. 6, when the user drags the global progress bar to the left, progress bars of all the panes uniformly move with the global progress bar. The streaming media information may include at least one type of the following information: video information, audio information, image information, and subtitle information.

Alternatively, when wanting to view a historical video image of a specific conference site among other conference sites, the user may drag a progress bar of a pane corresponding to the conference site to the left to a desired historical moment, so that the local user terminal determines that the user has entered a playback request message. FIG. 5 is used as an example, where when wanting to view a historical video image of a conference site 6, the user may drag a progress bar of a pane 6 to the left. The local user terminal sends the request message to the recording server. The recording server selects, according to the request message, corresponding multiple channels of streaming media information stored on the recording server, and the recording server may combine the multiple channels of streaming media information into a combination data stream, and send the combination data stream to the local user terminal. In the combination data stream, the pane 6 has been configured as the historical video image of the conference site 6 that is requested by the user, and panes corresponding to other conference sites remain unchanged.

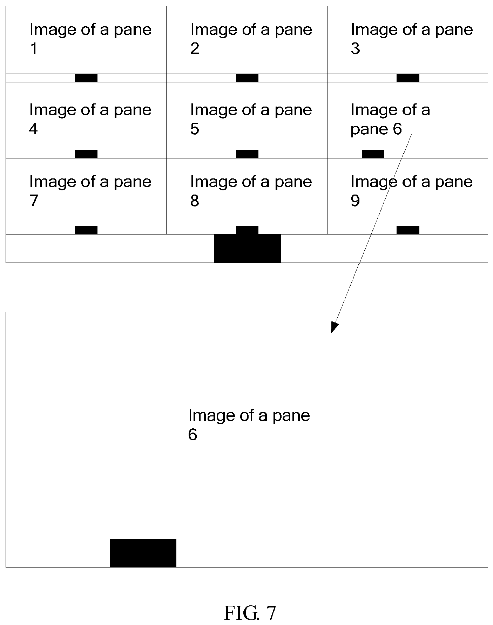

An image displayed on the screen of the local user terminal may be shown in FIG. 7, where the streaming media information may include at least one type of the following information: video information, audio information, image information, and subtitle information. The progress bar of the pane 6 is at a historical moment selected by the user, the pane 6 displays the historical image of the conference site 6, and other panes remain unchanged. The user may further enlarge the pane 6 to play at full screen, as show in FIG. 7. In this way, user experience can be further improved.

Alternatively, when wanting to view historical video images of multiple specific conference sites among other conference sites, the user may drag progress bars of panes corresponding to the conference sites to the left to a desired historical moment; or the user may select multiple panes for pane association, and when the user drags a progress bar of one pane, progress bars of other associated panes move correspondingly. FIG. 5 is also used as an example, where a pane 1 and a pane 2 are associated panes, and when wanting to view historical video images of a conference site 1 and a conference site 2 at the same time, the user may drag a progress bar of the pane 1 or the pane 2 to the left.

The local user terminal sends the request message to the recording server. The recording server selects, according to the request message, corresponding multiple channels of streaming media information stored on the recording server, and the recording server may combine the multiple channels of streaming media information into a combination data stream, and send the combination data stream to the local user terminal. In the combination data stream, the pane 1 and the pane 2 have been configured as the historical video images requested by the user, and panes corresponding to other conference sites remain unchanged.

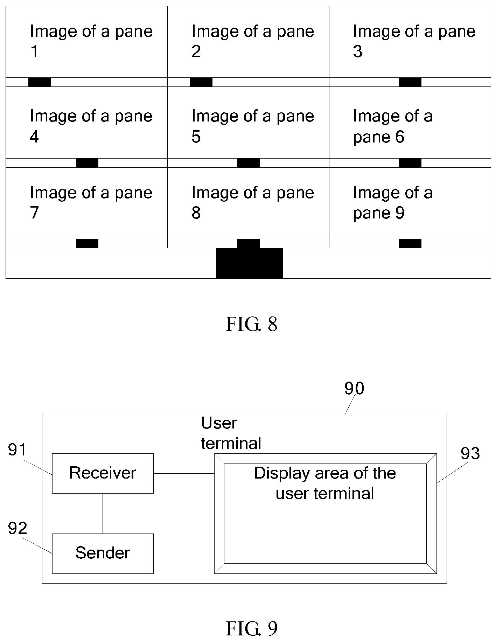

An image displayed on the screen of the local user terminal may be shown in FIG. 8, where the streaming media information may include at least one type of the following information: video information, audio information, image information, and subtitle information. The progress bars of the pane 1 and the pane 2 are at a historical moment selected by the user, the pane 1 and the pane 2 display the historical images of the conference site 1 and the conference site 2 respectively, and other panes remain unchanged.

Further, after receiving streaming media information of historical video images of other conference sites that is sent by the recording server, the local user terminal may further forward the streaming media information to user terminals of other conference sites that participate in the conference, so that the other conference sites can also refer to the recording and playback.

According to the video conference recording method provided in the embodiment of the present invention, a playback request message input by a user is received, and the playback request message is sent to a recording server; the recording server can select streaming media information according to the playback request message; and after receiving a combination data stream sent by the recording server, a user terminal displays at least one channel of streaming media information that is received, where the combination data stream includes the at least one channel of the streaming media information, and each of the at least one channel of the streaming media information is corresponding to one conference site. When recording and playback of a video conference are performed by using the method, recording and playback of a video of the conference can be implemented according to a user requirement when the video conference is in progress, thereby improving user experience.

A user terminal 90 provided in an embodiment of the present invention is corresponding to the foregoing method embodiments, and can be used in all steps of the foregoing method embodiments. Detailed steps of the methods corresponding to the user terminal 90 have been described in the foregoing method embodiments, and are not detailed herein. As shown in FIG. 9, the user terminal 90 includes:
a receiver 91, configured to receive a playback request message input by a user;
a sender 92, configured to send the playback request message to a recording server, so that the recording server selects recorded streaming media information according to the playback request message, where:
   the receiver 91 is further configured to receive a combination data stream sent by the recording server, where the combination data stream includes at least one channel of the streaming media information that is selected,
   and each of the at least one channel of the streaming media information is corresponding to one conference site; and
   a display area 93 of the user terminal, configured to display the streaming media information included in the received combination data stream.

According to the video conference user terminal provided in the embodiment of the present invention, a playback request message input by a user is received, and the playback request message is sent to a recording server; the recording server can select streaming media information according to the playback request message; and after receiving a combination data stream sent by the recording server, a user terminal displays at least one channel of streaming media information that is received, where the combination data stream includes the at least one channel of the streaming media information, and each of the at least one channel of the streaming media information is corresponding to one conference site. When recording and playback of a video conference are performed by using the method, recording and playback of a video of the conference can be implemented according to a user requirement when the video conference is in progress, thereby improving user experience.

Further, before receiving the playback request message input by the user, the receiver 91 may be further configured to receive streaming media identifier information sent by the recording server.

When a state of a conference site changes, the sender 92 may be further configured to send conference information to the recording server, so that the recording server updates the streaming media identifier information.

The conference information may include conference site information and media indication information of each conference site.

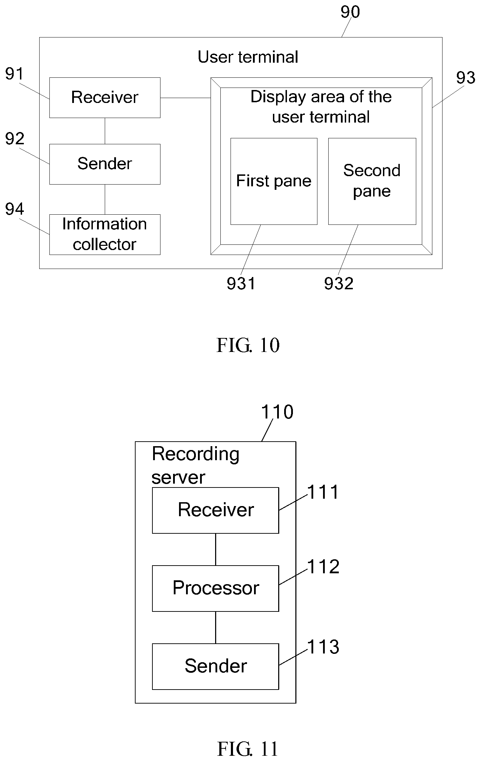

Further, as shown in FIG. 10, the user terminal 90 may further include:
an information collector 94, configured to collect an image and voice of a conference site accommodating the user, to obtain streaming media information.

The sender 92 may be further configured to send the streaming media information to the recording server.

Further, after the combination data stream sent by the recording server is received, the sender 92 may be further configured to forward the combination data stream to at least one another user terminal.

The receiver 91 may be further configured to receive the playback request message input by the user in the display area 93 of the user terminal.

The display area 93 of the user terminal may include at least one pane, and each pane is used to display a real-time image of one conference site.

Further, the playback request message may include streaming media identifier information and playback location information, where the streaming media identifier information may further include conference site identifier information of a conference site that participates in a conference or pane identifier information corresponding to the conference site that participates in the conference. The recording server may select a conference site that requires playback according to the streaming media identifier information and select, according to the playback location information, streaming media information that requires playback from recorded streaming media information of the conference site.

The streaming media identifier information may include identifier information of at least one pane.

The display area 93 of the user terminal may be further configured to:
when the streaming media identifier information includes identifier information of a first pane or conference site identifier information of a first conference site corresponding to the first pane, display, in the first pane 931 of the display area 93 of the user terminal, first streaming media information that is received and corresponding to the identifier information of the first pane or the conference site identifier information of the first conference site; or
when the streaming media identifier information is identifier information of a first pane or conference site identifier information of a first conference site corresponding to the first pane, display, in the display area 93 of the user terminal, first streaming media information that is received and corresponding to the identifier information of the first pane or the conference site identifier information of the first conference site; or
when the streaming media identifier information includes identifier information of a first pane or conference site identifier information of a first conference site corresponding to the first pane, and second pane identifier information or conference site identifier information of a second conference site corresponding to a second pane, display, in the first pane 931 of the display area 93 of the user terminal, first streaming media information that is received and corresponding to the identifier information of the first pane or the conference site identifier information of the first conference site; and synchronously display, in the second pane 932 of the display area 93 of the user terminal, second streaming media information that is received and corresponding to the second pane identifier information or the conference site identifier information of the second conference site.

The streaming media information may include at least one type of the following information: video information, audio information, image information, and subtitle information.

A recording server 110 provided in an embodiment of the present invention is corresponding to the foregoing method embodiments, and can be used in all steps in the foregoing method embodiments. Detailed steps of the methods corresponding to the recording server 110 have been described in the foregoing method embodiments, and are not detailed herein. As shown in FIG. 11, the recording server 110 includes:
a receiver 111, configured to obtain a playback request message;
a processor 112, configured to select streaming media information according to the playback request message, where:
   the processor 112 is further configured to combine at least one channel of the streaming media information that is selected into a combination data stream, where each of the at least one channel of the streaming media information is corresponding to one conference site; and
   a sender 113, configured to send the combination data stream to at least one user terminal.

According to the video conference recording server provided in the embodiment of the present invention, a playback request message input by a user is received, and the playback request message is sent to a recording server; the recording server can select streaming media information according to the playback request message; and after receiving a combination data stream sent by the recording server, a user terminal displays at least one channel of streaming media information that is received, where the combination data stream includes the at least one channel of the streaming media information, and each of the at least one channel of the streaming media information is corresponding to one conference site. When recording and playback of a video conference are performed by using the method, recording and playback of a video of the conference can be implemented according to a user requirement when the video conference is in progress, thereby improving user experience.

Further, before receiving the playback request message sent by the at least one user terminal, the receiver 111 may be further configured to receive streaming media identifier information input by the user.

The sender 113 may be further configured to send the streaming media identifier information to the at least one user terminal.

When a state of a conference site changes, the receiver 111 may be further configured to receive conference information sent by the at least one user terminal, where the conference information may include conference site information and media indication information of each conference site.

The processor 112 may update the streaming media identifier information according to the conference information.

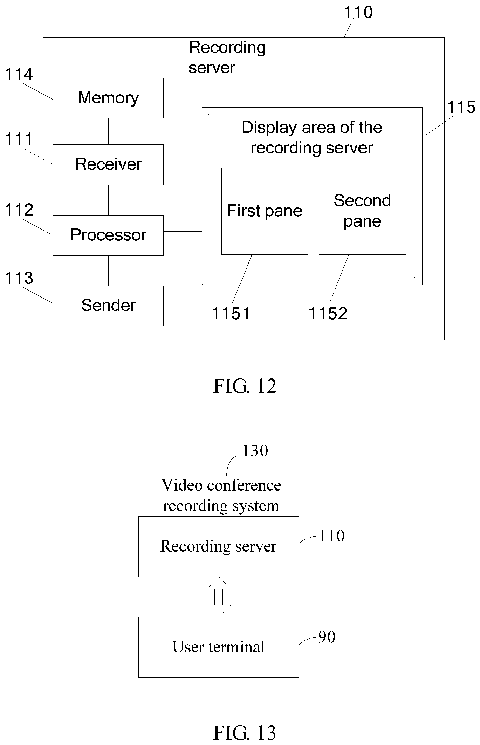

Further, as shown in FIG. 12, the recording server 110 may further include:
a memory 114, configured to receive and store the streaming media information sent by the at least one user terminal.

After the streaming media information is selected according to the playback request message, the recording server 110 may further include:
a display area 115 of the recording server, configured to display the at least one channel of the streaming media information that is selected.

Further, the receiver 111 may be further configured to:
receive a playback request message sent by the at least one user terminal; or
obtain a playback request message input by the user in the display area of the recording server, where the display area 115 of the recording server may include at least one pane, and each pane is used to display a real-time image of one conference site.

The playback request message may include streaming media identifier information and playback location information, where the streaming media identifier information may further include conference site identifier information of a conference site that participates in a conference or pane identifier information corresponding to the conference site that participates in the conference. The recording server may select a conference site that requires playback according to the streaming media identifier information and select, according to the playback location information, streaming media information that requires playback from recorded streaming media information of the conference site.

Further, the display area 115 of the recording server may be further configured to:
when the streaming media identifier information includes identifier information of a first pane or conference site identifier information of a first conference site corresponding to the first pane, display, in the first pane 1151 of the display area 115 of the recording server, first streaming media information that is selected and corresponding to the identifier information of the first pane or the conference site identifier information of the first conference site; or
when the streaming media identifier information is identifier information of a first pane or conference site identifier information of a first conference site corresponding to the first pane, display, in the display area 115 of the recording server, first streaming media information that is selected and corresponding to the identifier information of the first pane or the conference site identifier information of the first conference site; or
when the streaming media identifier information includes identifier information of a first pane or conference site identifier information of a first conference site corresponding to the first pane, and second pane identifier information or conference site identifier information of a second conference site corresponding to a second pane, display, in the first pane 1151 of the display area 115 of the recording server, first streaming media information that is selected and corresponding to the identifier information of the first pane or the conference site identifier information of the first conference site; and synchronously display, in the second pane 1152 of the display area 115 of the recording server, second streaming media information that is selected and corresponding to the second pane identifier information or the conference site identifier information of the second conference site.

The streaming media information may include at least one type of the following information: video information, audio information, image information, and subtitle information.

An embodiment of the present invention further provides a video conference recording system 130, which, as shown in FIG. 13, includes: at least one user terminal 90 as stated above, and the foregoing recording server 110.

Structures of the user terminal 90 and the recording server 110 have been described in detail in the foregoing embodiments, and details are not described herein again.

According to the video conference recording system provided in the embodiment of the present invention, a playback request message input by a user is received, and the playback request message is sent to a recording server; the recording server can select streaming media information according to the playback request message; and after receiving a combination data stream sent by the recording server, a user terminal displays at least one channel of streaming media information that is received, where the combination data stream includes the at least one channel of the streaming media information, and each of the at least one channel of the streaming media information is corresponding to one conference site. When recording and playback of a video conference are performed by using the method, recording and playback of a video of the conference can be implemented according to a user requirement when the video conference is in progress, thereby improving user experience.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A video conference recording method, comprising:
receiving (101), by a user terminal, a playback request message input by a user;
sending (102), by the user terminal, the playback request message to a recording server, so that the recording server selects recorded streaming media information according to the playback request message;
receiving (103), by the user terminal, a combination data stream sent by the recording server, wherein the combination data stream comprises at least two channels of the streaming media information that is selected, and each of the at least two channels of the streaming media information is corresponding to one conference site; and
displaying (104), by the user terminal, the streaming media information comprised in the received combination data stream in a display area, wherein the display area of the user terminal comprises at least two panes, each of the at least two panes is used to display an image of one conference site and each of the at least two panes has a progress bar indicating time of each pane.

2. The method according to claim 1, wherein the receiving, by the user terminal, a playback request message input by a user comprises:
receiving, by the user terminal, the playback request message input by the user in the display area of the user terminal.

3. The method according to claim 1 or 2, wherein the playback request message comprises streaming media identifier information and playback location information; wherein, the streaming media identifier information is used by the recording server to select a conference site that requires playback, and the playback location information is used by the recording server to select streaming media information that requires playback from recorded streaming media information of the conference site.

4. The method according to claim 3, wherein the displaying the streaming media information comprised in the received combination data stream comprises:
when the streaming media identifier information comprises identifier information of a first pane or conference site identifier information of a first conference site corresponding to the first pane, displaying, in the first pane of a display area of the user terminal, first streaming media information that is received and corresponding to the identifier information of the first pane or the conference site identifier information of the first conference site; or
when the streaming media identifier information is identifier information of a first pane or conference site identifier information of a first conference site corresponding to the first pane, displaying, in the display area of the user terminal, first streaming media information that is received and corresponding to the identifier information of the first pane or the conference site identifier information of the first conference site; or
when the streaming media identifier information comprises identifier information of a first pane or conference site identifier information of a first conference site corresponding to the first pane, and second pane identifier information or conference site identifier information of a second conference site corresponding to a second pane, displaying, in the first pane of the display area of the user terminal, first streaming media information that is received and corresponding to the identifier information of the first pane or the conference site identifier information of the first conference site; and synchronously displaying, in the second pane of the display area of the user terminal, second streaming media information that is received and corresponding to the second pane identifier information or the conference site identifier information of the second conference site.

5. A video conference recording method, comprising:
obtaining (201), by a recording server, a playback request message;
selecting (202), by the recording server, streaming media information according to the playback request message;
combining (203), by the recording server, at least two channels of the streaming media information that is selected into a combination data stream, wherein each of the at least two channels of the streaming media information is corresponding to one conference site; and
sending (204), by the recording server, the combination data stream to at least one user terminal,
wherein the streaming media information comprised in the sent combination data stream is displayed at the user terminal in a display area and the display area of the user terminal comprises at least two panes, each of the at least two panes is used to display an image of one conference site and each of the at least two panes has a progress bar indicating time of each pane.

6. The method according to claim 5, wherein the obtaining, by the recording server, a playback request message comprises:
receiving, by the recording server, the playback request message sent by the at least one user terminal; or
obtaining, by the recording server, the playback request message input by a user in a display area of the recording server, wherein the display area of the recording server comprises at least one pane, and each of the at least one pane is used to display an image of one conference site.

7. The method according to claim 5 or 6, wherein the playback request message comprises streaming media identifier information and playback location information; wherein
the selecting, by the recording server, streaming media information according to the playback request message is specifically:
selecting, by the recording server, a conference site whose streaming media information requires playback according to the streaming media identifier information and selecting, by the recording server, according to the playback location information, streaming media information that requires playback from recorded streaming media information of the conference site.

8. A user terminal, comprising:
a receiver (91), configured to receive a playback request message input by a user;
a sender (92), configured to send the playback request message to a recording server, so that the recording server selects recorded streaming media information according to the playback request message, wherein:
the receiver is further configured to receive a combination data stream sent by the recording server, wherein the combination data stream comprises at least two channels of the streaming media information that is selected, and each of the at least two channels of the streaming media information is corresponding to one conference site; and
a display area of the user terminal (93), configured to display the streaming media information comprised in the received combination data stream,
wherein the display area of the user terminal comprises at least two panes, each of the at least two panes is used to display an image of one conference site and each of the at least two panes has a progress bar indicating time of each pane.

9. The user terminal according to claim 8, wherein the receiver is further configured to:
receive the playback request message input by the user in the display area of the user terminal.

10. The user terminal according to claim 8 or 9, wherein the playback request message comprises streaming media identifier information and playback location information; wherein, the streaming media identifier information is used by the recording server to select a conference site that requires playback, and the playback location information is used by the recording server to select streaming media information that requires playback from recorded streaming media information of the conference site.

11. The user terminal according to claim 10, wherein the display area of the user terminal is further configured to:
when the streaming media identifier information comprises identifier information of a first pane or conference site identifier information of a first conference site corresponding to the first pane, display, in the first pane of the display area of the user terminal, first streaming media information that is received and corresponding to the identifier information of the first pane or the conference site identifier information of the first conference site; or
when the streaming media identifier information is identifier information of a first pane or conference site identifier information of a first conference site corresponding to the first pane, display, in the display area of the user terminal, first streaming media information that is received and corresponding to the identifier information of the first pane or the conference site identifier information of the first conference site; or
when the streaming media identifier information comprises identifier information of a first pane or conference site identifier information of a first conference corresponding to the first pane, and second pane identifier information or conference site identifier information of a second conference site corresponding to a second pane, display, in the first pane of the display area of the user terminal, first streaming media information that is received and corresponding to the identifier information of the first pane or the conference site identifier information of the first conference site; and synchronously display, in the second pane of the display area of the user terminal, second streaming media information that is received and corresponding to the second pane identifier information or the conference site identifier information of the second conference site.

12. A recording server, comprising:
a receiver (111), configured to obtain a playback request message;
a processor (112), configured to select streaming media information according to the playback request message, wherein:
the processor is further configured to combine at least two channels of the streaming media information that is selected into a combination data stream, wherein each of the at least two channels of the streaming media information is corresponding to one conference site; and
a sender (113), configured to send the combination data stream to at least one user terminal,
wherein the streaming media information comprised in the sent combination data stream is displayed at the user terminal in a display area and the display area of the user terminal comprises at least two panes, each of the at least two panes is used to display an image of one conference site and each of the at least two panes has a progress bar indicating time of each pane.

13. The recording server according to claim 12, wherein the receiver is further configured to:
receive the playback request message sent by the at least one user terminal; or
obtain the playback request message input by a user in a display area of the recording server, wherein the display area of the recording server comprises at least one pane, and each of the at least one pane is used to display an image of one conference site.

14. The recording server according to claim 12 or 13, wherein the playback request message comprises streaming media identifier information and playback location information, and the streaming media identifier information comprises conference site identifier information of a conference site that participates in a conference or pane identifier information corresponding to the conference site that participates in the conference; and
the processor is specifically configured to:
select a conference site that requires playback according to the streaming media identifier information and select, according to the playback location information, streaming media information that requires playback from recorded streaming media information of the conference site.

15. A video conference recording system, comprising: at least one user terminal according to any one of claims 8 to 11, and the recording server according to any one of claims 12 to 14.

## Patentansprüche

1. Videokonferenzaufzeichnungsverfahren, umfassend:
Empfangen (101), durch ein Benutzerendgerät, einer von einem Benutzer eingegebenen Wiedergabeanforderungsnachricht; Senden (102), durch das Benutzerendgerät, der Wiedergabeanforderungsnachricht an einen Aufzeichnungsserver, sodass der Aufzeichnungsserver aufgezeichnete Streaming-Medieninformationen entsprechend der Wiedergabeanforderungsnachricht auswählt; Empfangen (103), durch das Benutzerendgerät, eines Kombinationsdatenstroms, der von dem Aufzeichnungsserver gesendet wird, wobei der Kombinationsdatenstrom mindestens zwei Kanäle der Streaming-Medieninformationen, die ausgewählt werden, umfasst, und jeder der mindestens zwei Kanäle der Streaming-Medieninformationen einem Konferenzort entspricht; und
Anzeigen (104), durch ein Benutzerendgerät, der Streaming-Medieninformationen, welche in dem empfangenen Kombinationsdatenstrom in einer Anzeigefläche umfasst sind, wobei die Anzeigefläche des Benutzerendgeräts mindestens zwei Bereiche umfasst, wobei jeder der mindestens zwei Bereiche verwendet wird, um ein Bild von einem Konferenzort anzuzeigen und jeder der mindestens zwei Bereiche einen Fortschrittsbalken aufweist, der die Zeit jedes Bereichs angibt.

2. Verfahren nach Anspruch 1, wobei das Empfangen, durch das Benutzerendgerät, einer von einem Benutzer eingegebenen Wiedergabeanforderungsnachricht umfasst:
Empfangen, durch das Benutzerendgerät, der vom Benutzer eingegebenen Wiedergabeanforderungsnachricht in der Anzeigefläche des Benutzerendgeräts.

3. Verfahren nach Anspruch 1 oder 2, wobei die Wiedergabeanforderungsnachricht Streaming-Medienidentifikationsinformationen und Wiedergabeortsinformationen umfasst; wobei die Streaming-Medienidentifikationsinformationen von dem Aufzeichnungsserver verwendet werden, um einen Konferenzort auszuwählen, für den die Wiedergabe erforderlich ist, und die Wiedergabeortsinformationen von dem Aufzeichnungsserver verwendet werden, um Streaming-Medieninformationen auszuwählen, für welche die Wiedergabe aus den aufgezeichneten Streaming-Medieninformationen des Konferenzorts erforderlich ist.

4. Verfahren nach Anspruch 3, wobei das Anzeigen der Streaming-Medieninformationen, welche in dem empfangenen Kombinationsdatenstrom umfasst sind, umfasst:
wenn die Streaming-Medienidentifikationsinformationen Identifikationsinformationen eines ersten Bereichs oder Konferenzort-Identifikationsinformationen eines ersten Konferenzorts umfassen, der dem ersten Bereich entspricht, das Anzeigen, in dem ersten Bereich einer Anzeigefläche des Benutzerendgeräts, der ersten Streaming-Medieninformationen, welche empfangen werden und den Identifikationsinformationen des ersten Bereichs oder den Konferenzort-Identifikationsinformationen des ersten Konferenzorts entsprechen; oder
wenn die Streaming-Medienidentifikationsinformationen Identifikationsinformationen eines ersten Bereichs oder Konferenzort-Identifikationsinformationen eines ersten Konferenzorts sind, der dem ersten Bereich entspricht, das Anzeigen, in der Anzeigefläche des Benutzerendgeräts, der ersten Streaming-Medieninformationen, welche empfangen werden und den Identifikationsinformationen des ersten Bereichs oder den Konferenzort-Identifikationsinformationen des ersten Konferenzorts entsprechen; oder
wenn die Streaming-Medienidentifikationsinformationen Identifikationsinformationen eines ersten Bereichs oder KonferenzortIdentifikationsinformationen eines ersten Konferenzorts, die dem ersten Bereich entspricht, und Identifikationsinformationen eines zweiten Bereichs oder Konferenzort-Identifikationsinformationen eines zweiten Konferenzorts umfassen, der einem zweiten Bereich entspricht, das Anzeigen, in dem ersten Bereich der Anzeigefläche des Benutzerendgeräts, der ersten Streaming-Medieninformationen, welche empfangen werden und den Identifikationsinformationen des ersten Bereichs oder den Konferenzort-Identifikationsinformationen des ersten Konferenzorts entsprechen; und das gleichzeitige Anzeigen, in dem zweiten Bereich der Anzeigefläche des Benutzerendgeräts, der zweiten Streaming-Medieninformationen, welche empfangen werden und den Identifikationsinformationen des zweiten Bereichs oder den Konferenzort-Identifikationsinformationen des zweiten Konferenzorts entsprechen.

5. Videokonferenzaufzeichnungsverfahren, umfassend:
Erhalten (201), durch einen Aufzeichnungsserver, einer Wiedergabeanforderungsnachricht;
Auswählen (202), durch den Aufzeichnungsserver, der Streaming-Medieninformationen entsprechend der Wiedergabeanforderungsnachricht;
Kombinieren (203), durch den Aufzeichnungsserver, von mindestens zwei Kanälen der Streaming-Medieninformationen, welche ausgewählt werden, in einem Kombinationsdatenstrom, wobei jeder der mindestens zwei Kanäle der Streaming-Medieninformationen einem Konferenzort entspricht; und
Senden (204), durch den Aufzeichnungsserver, des Kombinationsdatenstroms zu mindestens einem Benutzerendgerät,
wobei die Streaming-Medieninformationen, welche in dem gesendeten Kombinationsdatenstrom umfasst sind, auf dem Benutzerendgerät in einer Anzeigefläche angezeigt werden und die Anzeigefläche des Benutzerendgeräts mindestens zwei Bereiche umfasst, wobei jeder der mindestens zwei Bereiche verwendet wird, um ein Bild von einem Konferenzort anzuzeigen, und jeder der mindestens zwei Bereiche einen Fortschrittsbalken aufweist, der die Zeit jedes Bereichs angibt.

6. Verfahren nach Anspruch 5, wobei das Erhalten, durch den Aufzeichnungsserver, einer Wiedergabeanforderungsnachricht umfasst:
Erhalten, durch den Aufzeichnungsserver, der von dem mindestens einen Benutzerendgerät gesendeten Wiedergabeanforderungsnachricht; oder
Erhalten, durch den Aufzeichnungsserver, der von einem Benutzer in einer Anzeigefläche des Aufzeichnungsservers eingegebenen Wiedergabeanforderungsnachricht, wobei die Anzeigefläche des Aufzeichnungsservers mindestens einen Bereich umfasst, und jeder der mindestens einen Bereiche verwendet wird, um ein Bild eines Konferenzorts anzuzeigen.

7. Verfahren nach Anspruch 5 oder 6, wobei die Wiedergabeanforderungsnachricht Streaming-Medienidentifikationsinformationen und Wiedergabeortsinformationen umfasst; wobei
das Auswählen, durch den Aufzeichnungsserver, der Streaming-Medieninformationen entsprechend der Wiedergabeanforderungsnachricht insbesondere umfasst:
Auswählen, durch den Aufzeichnungsserver, eines Konferenzorts, dessen Streaming-Medieninformationen eine Wiedergabe entsprechend den Streaming-Medienidentifikationsinformationen erfordert, und Auswählen, durch den Aufzeichnungsserver entsprechend der Wiedergabeortsinformationen, der Streaming-Medieninformationen, für welche die Wiedergabe aus den aufgezeichneten Streaming-Medieninformationen des Konferenzorts erforderlich ist.

8. Benutzerendgerät, umfassend:
einen Empfänger (91), der konfiguriert ist, um eine von einem Benutzer eingegebene Wiedergabeanforderungsnachricht zu empfangen;
einen Sender (92), der konfiguriert ist, um die Wiedergabeanforderungsnachricht an einen Aufzeichnungsserver zu senden, sodass der Aufzeichnungsserver aufgezeichnete Streaming-Medieninformationen entsprechend der Wiedergabeanforderungsnachricht auswählt, wobei:
der Empfänger ferner konfiguriert ist, um einen Kombinationsdatenstrom zu empfangen, der von dem Aufzeichnungsserver gesendet wird, wobei der Kombinationsdatenstrom mindestens zwei Kanäle der Streaming-Medieninformationen, die ausgewählt werden, umfasst, und jeder der mindestens zwei Kanäle der Streaming-Medieninformationen einem Konferenzort entspricht; und
eine Anzeigefläche des Benutzerendgeräts (93), die konfiguriert ist, um die Streaming-Medieninformationen anzuzeigen, welche in dem empfangenen Kombinationsdatenstrom umfasst sind, wobei die Anzeigefläche des Benutzerendgeräts mindestens zwei Bereiche umfasst, wobei jeder der mindestens zwei Bereiche verwendet wird, um ein Bild von einem Konferenzort anzuzeigen und jeder der mindestens zwei Bereiche einen Fortschrittsbalken aufweist, der die Zeit jedes Bereichs angibt.

9. Benutzerendgerät nach Anspruch 8, wobei der Empfänger ferner konfiguriert ist, um:
die durch den Benutzer in der Anzeigefläche des Benutzerendgeräts eingegebene Wiedergabeanforderungsnachricht zu empfangen.

10. Benutzerendgerät nach Anspruch 8 oder 9, wobei die Wiedergabeanforderungsnachricht Streaming-Medienidentifikationsinformationen und Wiedergabeortsinformationen umfasst; wobei die Streaming-Medienidentifikationsinformationen von dem Aufzeichnungsserver verwendet werden, um einen Konferenzort auszuwählen, für den die Wiedergabe erforderlich ist, und die Wiedergabeortsinformationen von dem Aufzeichnungsserver verwendet werden, um Streaming-Medieninformationen auszuwählen, für welche die Wiedergabe aus den aufgezeichneten Streaming-Medieninformationen des Konferenzorts erforderlich ist.

11. Benutzerendgerät nach Anspruch 10, wobei die Anzeigefläche des Benutzerendgeräts ferner konfiguriert ist, um:
wenn die Streaming-Medienidentifikationsinformationen Identifikationsinformationen eines ersten Bereichs oder Konferenzort-Identifikationsinformationen eines ersten Konferenzorts umfassen, der dem ersten Bereich entspricht, in dem ersten Bereich der Anzeigefläche des Benutzerendgeräts, die ersten Streaming-Medieninformationen anzuzeigen, welche empfangen werden und den Identifikationsinformationen des ersten Bereichs oder den Konferenzort-Identifikationsinformationen des ersten Konferenzorts entsprechen; oder
wenn die Streaming-Medienidentifikationsinformationen Identifikationsinformationen eines ersten Bereichs oder Konferenzort-Identifikationsinformationen eines ersten Konferenzorts sind, der dem ersten Bereich entspricht, in der Anzeigefläche des Benutzerendgeräts die ersten Streaming-Medieninformationen anzuzeigen, welche empfangen werden und den Identifikationsinformationen des ersten Bereichs oder den Konferenzort-Identifikationsinformationen des ersten Konferenzorts entsprechen; oder
wenn die Streaming-Medienidentifikationsinformationen Identifikationsinformationen eines ersten Bereichs oder Konferenzort-Identifikationsinformationen eines ersten Konferenzorts, der dem ersten Bereich entspricht, und Identifikationsinformationen eines zweiten Bereichs oder Konferenzort-Identifikationsinformationen eines zweiten Konferenzorts umfassen, der einem zweiten Bereich entspricht, in dem ersten Bereich der Anzeigefläche des Benutzerendgeräts, die ersten Streaming-Medieninformationen anzuzeigen, welche empfangen werden und den Identifikationsinformationen des ersten Bereichs oder den Konferenzort-Identifikationsinformationen des ersten Konferenzorts entsprechen; und gleichzeitig, in dem zweiten Bereich der Anzeigefläche des Benutzerendgeräts, die zweiten Streaming-Medieninformationen anzuzeigen, welche empfangen werden und den Identifikationsinformationen des zweiten Bereichs oder den Konferenzort-Identifikationsinformationen des zweiten Konferenzorts entsprechen.

12. Aufzeichnungsserver, umfassend:
einen Empfänger (111), der konfiguriert ist, um eine Wiedergabeanforderungsnachricht zu erhalten;
einen Prozessor (112), der konfiguriert ist, um Streaming-Medieninformationen entsprechend der Wiedergabeanforderungsnachricht auszuwählen, wobei:
der Prozessor ferner konfiguriert ist, um mindestens zwei Kanäle der Streaming-Medieninformationen zu kombinieren, die für einen Kombinationsdatenstrom ausgewählt werden, wobei jeder der mindestens zwei Kanäle der Streaming-Medieninformationen einem Konferenzort entspricht; und
einen Sender (113), der konfiguriert ist, um den Kombinationsdatenstrom an mindestens ein Benutzerendgerät zu senden, wobei die Streaming-Medieninformationen, welche in dem gesendeten Kombinationsdatenstrom umfasst sind, auf dem Benutzerendgerät in einer Anzeigefläche angezeigt werden und die Anzeigefläche des Benutzerendgeräts mindestens zwei Bereiche umfasst, wobei jeder der mindestens zwei Bereiche verwendet wird, um ein Bild von einem Konferenzort anzuzeigen und jeder der mindestens zwei Bereiche einen Fortschrittsbalken aufweist, der die Zeit jedes Bereichs angibt.

13. Aufzeichnungsserver nach Anspruch 12, wobei der Empfänger ferner konfiguriert ist, um:
die von dem mindestens einem Benutzerendgerät gesendete Wiedergabeanforderungsnachricht zu empfangen; oder
die von einem Benutzer in einer Anzeigefläche des Aufzeichnungsservers eingegebene Wiedergabeanforderungsnachricht zu erhalten, wobei die Anzeigefläche des Aufzeichnungsservers mindestens einen Bereich umfasst, und jeder der mindestens einen Bereiche verwendet wird, um ein Bild eines Konferenzorts anzuzeigen.

14. Aufzeichnungsserver nach Anspruch 12 oder 13, wobei die Wiedergabeanforderungsnachricht Streaming-Medienidentifikationsinformationen und Wiedergabeortsinformationen umfasst, und die Streaming-Medienidentifikationsinformationen Konferenzort-Identifikationsinformationen eines Konferenzorts, der an einer Konferenz teilnimmt, oder Bereichs-Identifikationsinformationen, welche dem Konferenzort entsprechen, der an der Konferenz teilnimmt, umfassen; und
der Prozessor insbesondere konfiguriert ist, um:
einen Konferenzort auszuwählen, für den die Wiedergabe entsprechend der Streaming-Medienidentifikationsinformationen erforderlich ist, und entsprechend der Wiedergabeortsinformationen die Streaming-Medieninformationen auszuwählen, für welche die Wiedergabe aus den aufgezeichneten Streaming-Medieninformationen des Konferenzorts erforderlich sind.

15. Videokonferenzaufzeichnungssystem, umfassend: mindestens ein Benutzerendgerät nach einem der Ansprüche 8 bis 11 und den Aufzeichnungsserver nach einem der Ansprüche 12 bis 14.

## Revendications

1. Procédé d'enregistrement de vidéoconférence, comprenant :
la réception (101), par un terminal utilisateur, d'un message de demande de reproduction fourni en entrée par un utilisateur ;
l'envoi (102), par le terminal utilisateur, du message de demande de reproduction à un serveur d'enregistrement, de manière à ce que le serveur d'enregistrement sélectionne des informations multimédia diffusées en continu enregistrées conformément au message de demande de reproduction ;
la réception (103), par le terminal utilisateur, d'un flux de données de combinaison envoyé par le serveur d'enregistrement, dans lequel le flux de données de combinaison comprend au moins deux canaux des informations multimédia diffusées en continu qui sont sélectionnées, et chacun des au moins deux canaux des informations multimédia diffusées en continu correspond à un site de conférence ; et
l'affichage (104), par le terminal utilisateur, des informations multimédia diffusées en continu comprises dans le flux de données de combinaison reçu dans une zone d'affichage, dans lequel la zone d'affichage du terminal utilisateur comprend au moins deux panneaux, chacun des au moins deux panneaux étant utilisé pour afficher une image d'un site de conférence et chacun des au moins deux panneaux comportant une barre de progression indiquant le temps de chaque panneau.

2. Procédé selon la revendication 1, dans lequel la réception, par le terminal utilisateur, d'un message de demande de reproduction fourni en entrée par un utilisateur comprend :
la réception, par le terminal utilisateur, du message de demande de reproduction fourni en entrée par l'utilisateur dans la zone d'affichage du terminal utilisateur.

3. Procédé selon la revendication 1 ou 2, dans lequel le message de demande de reproduction comprend des informations d'identifiant multimédia diffusées en continu et des informations de localisation de reproduction ; dans lequel les informations d'identifiant multimédia diffusées en continu sont utilisées par le serveur d'enregistrement pour sélectionner un site de conférence qui nécessite une reproduction, et les informations de localisation de reproduction sont utilisées par le serveur d'enregistrement pour sélectionner les informations multimédia diffusées en continu qui nécessitent une reproduction à partir des informations multimédia diffusées en continu enregistrées du site de conférence.

4. Procédé selon la revendication 3, dans lequel l'affichage des informations multimédia diffusées en continu comprises dans le flux de données de combinaison reçu comprend :
lorsque les informations d'identifiant multimédia diffusées en continu comprennent des informations d'identifiant d'un premier panneau ou des informations d'identifiant de site de conférence d'un premier site de conférence correspondant au premier panneau, l'affichage, dans le premier panneau d'une zone d'affichage du terminal utilisateur, de premières informations multimédia diffusées en continu qui sont reçues et correspondent aux informations d'identifiant du premier panneau ou aux informations d'identifiant de site de conférence du premier site de conférence ; ou
lorsque les informations d'identifiant multimédia diffusées en continu sont des informations d'identifiant d'un premier panneau ou des informations d'identifiant de site de conférence d'un premier site de conférence correspondant au premier panneau, l'affichage, dans la zone d'affichage du terminal utilisateur, de premières informations multimédia diffusées en continu qui sont reçues et correspondent aux informations d'identifiant du premier panneau ou aux informations d'identifiant de site de conférence du premier site de conférence ; ou
lorsque les informations d'identifiant multimédia diffusées en continu comprennent des informations d'identifiant d'un premier panneau, ou des informations d'identifiant de site de conférence d'un premier site de conférence correspondant au premier panneau, et des secondes informations d'identifiant de panneau ou des informations d'identifiant de site de conférence d'un second site de conférence correspondant à un second panneau, l'affichage, dans le premier panneau de la zone d'affichage du terminal utilisateur, de premières informations multimédia diffusées en continu qui sont reçues et correspondent aux informations d'identifiant du premier panneau ou aux informations d'identifiant de site de conférence du premier site de conférence ; et l'affichage synchrone, dans le second panneau de la zone d'affichage du terminal utilisateur, de secondes informations multimédia diffusées en continu qui sont reçues et correspondent aux secondes informations d'identifiant de panneau ou aux informations d'identifiant de site de conférence du second site de conférence.

5. Procédé d'enregistrement de vidéoconférence, comprenant :
l'obtention, (201), par un serveur d'enregistrement, d'un message de demande de reproduction ;
la sélection (202), par le serveur d'enregistrement, d'informations multimédia diffusées en continu conformément au message de demande de reproduction ;
la combinaison (203), par le serveur d'enregistrement, d'au moins deux canaux des informations multimédia diffusées en continu qui sont sélectionnées dans un flux de données de combinaison, dans lequel chacun des au moins deux canaux des informations multimédia diffusées en continu correspond à un site de conférence ; et l'envoi (204), par le serveur d'enregistrement, du flux de données de combinaison à au moins un terminal utilisateur, dans lequel les informations multimédia diffusées en continu comprises dans le flux de données de combinaison envoyé sont affichées sur le terminal utilisateur dans une zone d'affichage, et la zone d'affichage du terminal utilisateur comprend au moins deux panneaux, chacun des au moins deux panneaux étant utilisé pour afficher une image d'un site de conférence et chacun des au moins deux panneaux comportant une barre de progression indiquant le temps de chaque panneau.

6. Procédé selon la revendication 5, dans lequel l'obtention, par le serveur d'enregistrement, d'un message de demande de reproduction comprend :
la réception, par le serveur d'enregistrement, du message de demande de reproduction envoyé par l'au moins un terminal utilisateur ; ou
l'obtention, par le serveur d'enregistrement, du message de demande de reproduction fourni en entrée par un utilisateur dans une zone d'affichage du serveur d'enregistrement, dans lequel la zone d'affichage du serveur d'enregistrement comprend au moins un panneau, et chacun de l'au moins un panneau est utilisé pour afficher une image d'un site de conférence.

7. Procédé selon la revendication 5 ou 6, dans lequel le message de demande de reproduction comprend des informations d'identifiant multimédia diffusées en continu et des informations de localisation de reproduction ; dans lequel la sélection, par le serveur d'enregistrement, d'informations multimédia diffusées en continu conformément au message de demande de reproduction comprend plus précisément :
la sélection, par le serveur d'enregistrement, d'un site de conférence dont des informations multimédia diffusées en continu nécessitent une reproduction conformément aux informations d'identifiant multimédia diffusées en continu et la sélection, par le serveur d'enregistrement, conformément aux informations de localisation de reproduction, d'informations multimédia diffusées en continu qui nécessitent une reproduction à partir des informations multimédia diffusées en continu enregistrées du site de conférence.

8. Terminal utilisateur, comprenant :
un récepteur (91), configuré pour recevoir un message de demande de reproduction fourni en entrée par un utilisateur ;
un émetteur (92), configuré pour envoyer le message de demande de reproduction à un serveur d'enregistrement, de manière à ce que le serveur d'enregistrement sélectionne des informations multimédia diffusées en continu enregistrées conformément au message de demande de reproduction, dans lequel :
le récepteur est en outre configuré pour recevoir un flux de données de combinaison envoyé par le serveur d'enregistrement, dans lequel le flux de données de combinaison comprend au moins deux canaux des informations multimédia diffusées en continu qui sont sélectionnées, et chacun des au moins deux canaux des informations multimédia diffusées en continu correspond à un site de conférence ; et
une zone d'affichage du terminal utilisateur (93), configurée pour afficher les informations multimédia diffusées en continu comprises dans le flux de données de combinaison reçu,
dans lequel la zone d'affichage du terminal utilisateur comprend au moins deux panneaux, chacun des au moins deux panneaux étant utilisé pour afficher une image d'un site de conférence et chacun des au moins deux panneaux comportant une barre de progression indiquant le temps de chaque panneau.

9. Terminal utilisateur selon la revendication 8, dans lequel le récepteur est en outre configuré pour :
recevoir le message de demande de reproduction fourni en entrée par l'utilisateur dans la zone d'affichage du terminal utilisateur.

10. Terminal utilisateur selon la revendication 8 ou 9, dans lequel le message de demande de reproduction comprend des informations d'identifiant multimédia diffusées en continu et des informations de localisation de reproduction ; dans lequel les informations d'identifiant multimédia diffusées en continu sont utilisées par le serveur d'enregistrement pour sélectionner un site de conférence qui nécessite une reproduction, et les informations de localisation de reproduction sont utilisées par le serveur d'enregistrement pour sélectionner des informations multimédia diffusées en continu qui nécessitent une reproduction à partir des informations multimédia diffusées en continu enregistrées du site de conférence.

11. Terminal utilisateur selon la revendication 10, dans lequel la zone d'affichage du terminal utilisateur est en outre configurée pour :
lorsque les informations d'identifiant multimédia diffusées en continu comprennent des informations d'identifiant d'un premier panneau ou des informations d'identifiant de site de conférence d'un premier site de conférence correspondant au premier panneau, afficher, dans le premier panneau de la zone d'affichage du terminal utilisateur, des premières informations multimédia diffusées en continu qui sont reçues et correspondent aux informations d'identifiant du premier panneau ou aux informations d'identifiant de site de conférence du premier site de conférence ; ou
lorsque les informations d'identifiant multimédia diffusées en continu sont des informations d'identifiant d'un premier panneau, ou des informations d'identifiant de site de conférence d'un premier site de conférence correspondant au premier panneau, afficher, dans la zone d'affichage du terminal utilisateur, des premières informations multimédia diffusées en continu qui sont reçues et correspondent aux informations d'identifiant du premier panneau ou aux informations d'identifiant de site de conférence du premier site de conférence ; ou
lorsque les informations d'identifiant multimédia diffusées en continu comprennent des informations d'identifiant d'un premier panneau ou des informations d'identifiant de site de conférence d'une première conférence correspondant au premier panneau, et des secondes informations d'identifiant de panneau ou des informations d'identifiant de site de conférence d'un second site de conférence correspondant à un second panneau, afficher, dans le premier panneau de la zone d'affichage du terminal utilisateur, des premières informations multimédia diffusées en continu qui sont reçues et
correspondent aux informations d'identifiant du premier panneau ou aux informations d'identifiant de site de conférence du premier site de conférence ; et afficher de manière synchrone, dans le second panneau de la zone d'affichage du terminal utilisateur, des secondes informations multimédia diffusées en continu qui sont reçues et correspondent aux secondes informations d'identifiant de panneau ou aux informations d'identifiant de site de conférence du second site de conférence.

12. Serveur d'enregistrement, comprenant :
un récepteur (111), configuré pour obtenir un message de demande de reproduction ;
un processeur (112), configuré pour sélectionner des informations multimédia diffusées en continu conformément au message de demande de reproduction, dans lequel :
le processeur est en outre configuré pour combiner au moins deux canaux des informations multimédia diffusées en continu qui sont sélectionnées en un flux de données de combinaison, dans lequel chacun des au moins deux canaux des informations multimédia diffusées en continu correspond à un site de conférence ; et
un émetteur (113), configuré pour envoyer le flux de données de combinaison à au moins un terminal utilisateur, dans lequel les informations multimédia diffusées en continu comprises dans le flux de données de combinaison envoyé sont affichées sur le terminal utilisateur dans une zone d'affichage et la zone d'affichage du terminal utilisateur comprend au moins deux panneaux, chacun des au moins deux panneaux étant utilisé pour afficher une image d'un site de conférence et chacun des au moins deux panneaux comportant une barre de progression indiquant le temps de chaque panneau.

13. Serveur d'enregistrement selon la revendication 12, dans lequel le récepteur est en outre configuré pour :
recevoir le message de demande de reproduction envoyé par l'au moins un terminal utilisateur ; ou
obtenir le message de demande de reproduction fourni en entrée par un utilisateur dans une zone d'affichage du serveur d'enregistrement, dans lequel la zone d'affichage du serveur d'enregistrement comprend au moins un panneau, et chacun de l'au moins un panneau est utilisé pour afficher une image d'un site de conférence.

14. Serveur d'enregistrement selon la revendication 12 ou 13, dans lequel le message de demande de reproduction comprend des informations d'identifiant multimédia diffusées en continu et des informations de localisation de reproduction, et les informations d'identifiant multimédia diffusées en continu comprennent des informations d'identifiant de site de conférence d'un site de conférence qui participe à une conférence ou des informations d'identifiant de panneau correspondant au site de conférence qui participe à la conférence ; et
le processeur est spécifiquement configuré pour :
sélectionner un site de conférence qui nécessite une reproduction conformément aux informations d'identifiant multimédia diffusées en continu et sélectionner, conformément aux informations de localisation de reproduction, les informations multimédia diffusées en continu qui nécessitent une reproduction à partir des informations multimédia diffusées en continu enregistrées du site de conférence.

15. Système d'enregistrement de vidéoconférence, comprenant: au moins un terminal utilisateur selon l'une quelconque des revendications 8 à 11 et le serveur d'enregistrement selon l'une quelconque des revendications 12 à 14.
